# EUROPÄISCHE PATENTANMELDUNG

(11) **EP 4 534 042 A1**
(43) Veröffentlichungstag der Anmeldung: **09.04.2025**
(21) Anmeldenummer: 23202082.6
(22) Anmeldetag: 06.10.2023
(51) Int. Cl.: A61C 13/00, A61C 13/12, A61C 13/36, A61C 13/08

(54) **HERSTELLUNGSVERFAHREN FÜR ZAHNPROTHESENZÄHNE UND ROHLINGE DAFÜR**

(71) Anmelder: Herting, Torsten, 3818 Grindelwald (CH)
(72) Erfinder: Herting, Torsten, 3818 Grindelwald (CH)
(74) Vertreter: AMMANN PATENTANWÄLTE AG

(57) **Zusammenfassung**

Ein Prothesenzahnrohling (1) wird mit einem Zapfen (3) auf der Kaufläche (5) versehen, um ihn durch Einstecken des Zapfens (3) in eine Fassung (15) in einem Blank (7) an vorgegebener Position anzuordnen. Bevorzugt sind die Fassungen (15) Löcher in dem Blank (7), die präzise an einen individuell gestalteten Abschnitt (11) des Zapfens angepasst sind. Damit wird eine genaue Referenzierung der Prothesenzahnrohlinge im blank (7, 29) erzielt. Nach Anbringung am Blank (7, 29) können die Prothesenzahnrohlinge (1) an den freiliegenden Abschnitten bearbeitet werden, insbesondere basal und an den Flanken (21, 23). Der Zapfen ist wenigstens am prothesenseitigen Ende aus dem gleichen Material gefertigt wie das Material der Kaufläche, so dass nach Entfernen des Zapfens (3) vermieden wird, dass Fremdmaterial auf der Kaufläche verbleibt. In einem Blank (7, 29) mit einer beabstandeten Anordnung der Prothesenzahnrohlinge (1, 27) können alle Flanken bearbeitet werden.

## Beschreibung

Die vorliegende Erfindung bezieht sich auf einen Zahnprothesenzahnrohling gemäss Oberbegriff des Anspruch 1. Des Weiteren bezieht sie sich auf ein Verfahren zur Herstellung einer Zahnprothese, bei dem solche Zahnprothesenzahnrohlinge verwendet werden.

Digital hergestellte Zahnprothesen sind qualitativ deutlich schlechter als konventionell hergestellte. Insbesondere können folgende Nachteile festgestellt werden:
1. Abrasionsverhalten der Zähne ist schlechter
2. Farbverhalten ist deutlich schlechter:
   a. Materialien wirken weniger lebendig
   b. Schichtung nur horizontal möglich, keine individuelle Schichtung
   c. Transluzenzeigenschaften sind stark eingeschränkt und unveränderbar
3. Der Materialverbrauch ist beim Fräsen eines Zahnkranzes deutlich grösser. Die Rohlinge (Blanks) sind wenig nachhaltig, da sehr viel Abfall anfällt. Z B. können aus einem Rohling in einem bekannten Verfahren maximal 2 Zahnkränze hergestellt werden.
4. Das Preis-Leistungsverhältnis ist bei Verwendung von Prothesenzähnen aus konventionellen Prothesenzahnsätzen deutlich besser.
5. Die Zähne, die aus einem Blank hergestellt sind, sind miteinander verbunden, nicht einzeln: Es resultiert eine deutlich schlechtere Optik
6. Oft stark eingeschränkte Farbwahl.
7. Zahnfarbe A4 (relativ dunkel) ist nicht verfügbar, obwohl sie sehr häufig bei älteren Patienten vorkommt: Prothesen-Patienten haben meist deutlich schlechtere Mundhygiene, aber auch Rauchen, Trinken von Tee und Rotwein verfärben die Zähne zu einem dunkleren Farbton.
8. Teilprothesen mit Metallgerüst sind mit bisher verfügbaren Systemen nicht herstellbar.
9. Teilprothesen mit Kunststoffklammern sind eher Langzeitprovisorien.

Die gängigen digitalen Herstellungsverfahren zeichnen sich durch folgende Merkmale aus:
- 1. Zähne müssen einzeln verklebt werden
- 2. zusätzlicher Kleber, ggf. Primer notwendig
- 3. eingeschränkte Farben
- 4. Transluzent-Verhalten kann nicht variiert werden
- 5. eingeschränkte Formen
- 6. Nur Fälle lösbar, bei denen die Zähne unten, also basal, nicht zu lang sind
- 7. Nur 28er-Prothesen (Vollprothese mit 28 Zähnen)
- 8. Bei "14er"-Prothesen (Prothese mit 14 Zähnen, ersetzt einen Kiefer) gilt:
   - Sie sind nur teilweise digital hergestellt.
   - Modelle müssen erstellt werden.
   - Prothese muss einartikuliert werden, also im Artikulator (Gebisssimulator) eingepasst werden.
   - Manuelles Einschleifen im Artikulator ist nötig.
- 9. Keine Teilprothesen mit Metallgerüst, keine Kunststoff-Teilprothesen.

Derzeit sind konfektionierte Prothesenzähne die besten Prothesenzähne. Ihre Verwendung ist jedoch aufwendig und erfordert Handarbeit. Im Detail sind regelmässig folgende Arbeitsschritte durchzuführen:
- Da bei vielen Total- und fast allen Teilprothesen mit Metallgerüst das Platzangebot nicht ausreichend ist müssen die Zähne zunächst basal maschinell bearbeitet werden. Im Bereich der Klammerschultern ist i.d.R. auch ein Schleifen der approximalen Flächen notwendig. Dies ist bei keinem System bisher möglich. Dazu müssen die Prothesenzähne in eine Fräsmaschine eingesetzt und referenziert werden, also die Anordnung in Koordinaten der Fräsmaschine genau ermittelt werden, damit die Bearbeitung an den richtigen Stellen erfolgt. Ein geeignetes Verfahren ist in WO2020058442A2 angegeben.

Die Prothesen-Zähne weisen gewisse Fertigungstoleranzen auf. Das führt dazu, dass die Rohlinge unterschiedlich genau in die Hilfs- und Halte-Blanks passen würden, insbesondere dann, wenn die einzelnen Zähne aus unterschiedlichen Chargen stammen.

Gemäss WO2020058442A fräst die Fräsmaschine deshalb für jeden Prothesenzahn individuell Haltestrukturen in einen Hilfs-Blank. Jeder konfektionierte Prothesenzahn weist auf der Kaufläche dazu unverwechselbare komplementäre Strukturen auf, die eine spielfreie Positionierung und ausreichenden Halt für den Fräsvorgang gewährleisten. Durch die Herstellung der Haltestruktur durch die Fräsmaschine ist die genaue Position und Anordnung der Prothesenzähne bekannt.

Für diese gefrästen Zähne fräst die Maschine auf analoge Art einen Halte-Blank, sodass die korrigierten Prothesenzähne dort positionsgenau eingesetzt und ggf. mechanisch oder chemisch befestigt werden können.

Anschliessend wird die Oberseite des Kiefermodells aus rosa PMMA geformt und als Guss- oder Pressform für die innere Schicht der rosafarbenen Prothesenbasis gefräst oder aus POM oder anderem Material gefräst oder gedruckt. Dass Metallgerüst wird ggf. passgenau aufgesetzt (z. B. gemäss EP3930625A1). Beide Blanks werden dann mit rosa PMMA im Giess- oder Pressverfahren zu einem Sandwichblank mit exakt positioniertem Metallgerüst verklebt und dieser Rohling der gesamten Prothese wird einschliesslich der Kauflächen final gefräst, um die einsatzbereite Prothese zu erhalten.

Die so erhaltenen Prothesen erfüllen zwar derzeit am besten die Anforderungen, aber es wird ein grosser Satz an vorgefertigten Prothesenzähnen benötigt, um insbesondere ein natürliches Aussehen zu erhalten. Digital, d.h. vor Ort hergestellte Zähne lassen erwarten, mit einem geringeren Sortiment an vorgefertigten Prothesenzähnen auszukommen, führen aber aus weiter obengenannten Gründen zu qualitativ weniger befriedigenden Prothesen.

Eine Aufgabe der vorliegenden Erfindung besteht darin, einen Prothesenzahnrohling anzugeben, der eine bessere Bearbeitungsmöglichkeit bietet.

Eine andere, bevorzugt zu lösende Aufgabe besteht darin, ein Verfahren anzugeben, mit dem hochwertige Prothesenzähne digital herstellbar sind, die besser an das natürliche Aussehen angepasst sind.

Ein solcher Prothesenzahnrohling ist im Anspruch 1 angegeben. Die weiteren Ansprüche geben bevorzugte Ausführungsformen, Sätze aus solchen Prothesenzahnrohlingen sowie Verfahren zur Herstellung einer Zahnprothese an.

Weitere Aufgaben, die wenigstens in bevorzugten Ausführungsformen gelöst werden, sind:
- Herstellung hochwertiger Prothesenzähne im Hinblick auf Kosmetik (Aussehen) und Stabilität und sonstigen Eigenschaften, die einen vertrauten Umgang und Anwendung bewährter Verfahren gestatten.
- Individuelle Aufstellung der Zähne
- Individuelle Anpassung durch Individualisierung des Transluzenzverhaltens
- Verbesserte Farbschichtung des rosafarbenen Anteils der Basis, damit eine bessere Endqualität als konventionell hergestellte Prothesen.

Eine erste Ausführung der Erfindung zeichnet sich dadurch aus, dass ein Prothesenzahn auf der Fläche, die zur Kaufläche des Zahns (wobei "Kaufläche" in Beschreibung und Ansprüchen auch für die Schneide von Schneide- und Eckzähnen steht) in der fertiggestellten Prothese wird, ein Zapfen, bevorzugt von charakteristischer Form, vorhanden ist. Mittels des Zapfens kann der Prothesenzahn an einem Halteblank angebracht werden. Der Halteblank weist dazu ein Loch auf, das genau an den Zapfen angepasst ist. Nach Anbringen aller Prothesenzähne auf diese Art befinden sich diese in einer vorbekannten Anordnung, insbesondere in der Anordnung, die in der fertiggestellten Prothese vorliegt. In der Folge können die Zähne am unteren Ende bearbeitet werden. Auch die buccalen und palatinalen Oberflächen der Prothesenzähne können nun bearbeitet werden. Der Blank kann eingerichtet sein, um genau referenziert in einer Werkzeugmaschine angeordnet zu werden. Da die im Blank angefertigten Löcher für die Zapfen, bevorzugt von der Werkzeugmaschine gefräste Löcher, ebenfalls genau referenziert sind und die Position und Anordnung der Zapfen auf den Prothesenzähnen bekannt ist, sind damit auch die Prothesenzähne im Blank genau referenziert und damit auch in einer Werkzeugmaschine, in der der Blank referenziert aufgespannt ist. Alternativ kann der Blank auch in einem additiven Verfahren gedruckt werden, bevorzugt auch mit den Löchern für Zapfen. In letzterem Fall ist je nach Präzision noch ein Nachbearbeiten nötig.

Eine zweite, bevorzugte Ausführung der Erfindung besteht darin, Rohprothesenzähne mit Dentinkernen verschiedener Grösse und Farbgebung zu verwenden, bei denen jedoch der Kern mit einem Übermass an (Zahn-)Schmelzmaterial umgeben ist. Das überschüssige Schmelzmaterial wird abgefräst, wobei auch die Position und Ausrichtung des Dentinkerns relativ zur Oberfläche angepasst wird. Es ergibt sich ein besser an die natürlichen Verhältnisse angepasstes Aussehen, da damit die Schichtdicke des Zahnschmelzes individuell an das natürliche Original anpassbar und damit ästhetisch ansprechender ist. Diese Bearbeitung erfolgt bevorzugt unter digitaler Kontrolle.

Die Erfindung wird weiter anhand von Ausführungsbeispielen unter Bezugnahme auf Figuren erläutert. Es zeigen:

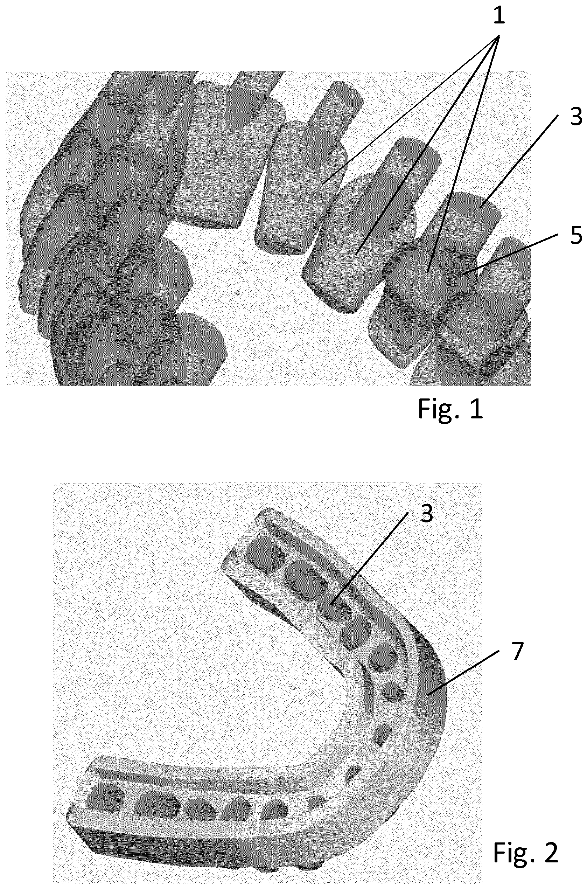

- Fig. 1: Anordnung von Prothesenzähnen, ohne Haltestruktur (Blank/Zahnfleischimitat).
- Fig. 2: Ansicht auf Rückseite Halteblank, Enden der Zapfen sichtbar.

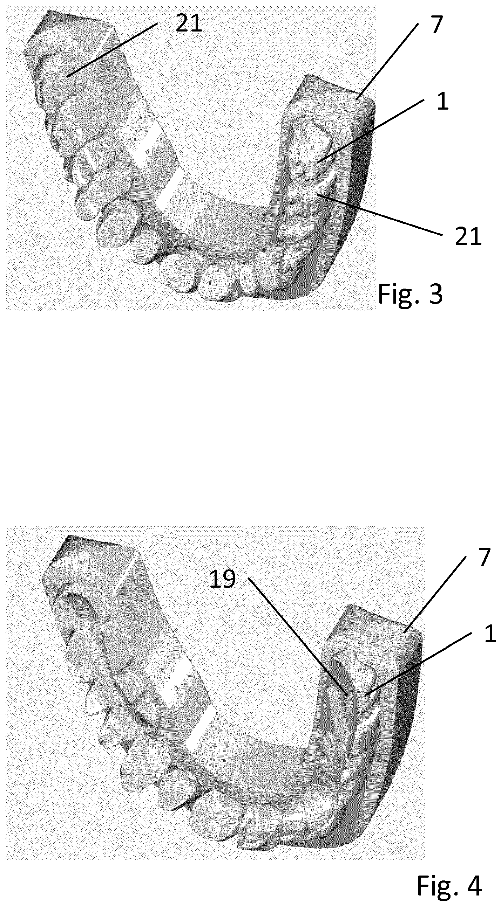

- Fig. 3: Ansicht von schräg unten auf einen U-förmigen Blank mit Prothesenzähnen.
- Fig 4: Wie Fig. 3, basale Enden der Prothesenzähne sind jedoch bearbeitet (bevorzugt gefräst).
- Fig. 5: Beispielhafte Anordnung von Prothesenzahn-Rohlingen, z.B. in einem Hilfsblank; Hilfsblank nicht dargestellt.
- Fig. 6: Wie Fig. 5, aber ein Teil der Prothesenzahn-Rohlinge bearbeitet.
- Fig. 7: Prothesenzähne aus Fig.6, fertig bearbeitet in der endgültigen Anordnung, Haltestrukturen nicht gezeigt.
- Fig, 8: Eine andere Ausführung eines Blanks mit Referenzierungslöchern.
- Fig. 9: Seitenansicht eines Prothesenzahn-Rohlings, Dentinkern angedeutet.
- Fig. 10: Ansicht auf Prothesenzahn-Rohling aus Fig. 9 von oben, Dentinkern angedeutet.
- Fig. 11: Wie Fig. 10, Linienzeichnung.
- Fig. 12: Längsschnitt durch Prothesenzahn-Rohling in einem Blank, Fixierung durch Schraube.

Gemäss einer ersten Ausführung werden Prothesenzähne (**PZ**) 1 verwendet wie die bekannten, die jedoch mit dem Zapfen 3 auf der Kaufläche 5 versehen sind. Der Zapfen 3 dient der eindeutigen Positionierung in einem Blank 7. Der Zapfen 3 hat an der Basis einen kreiszylindrischen Abschnitt 9 und darüber einen individuell gestalteten Abschnitt 11, bevorzugt von elliptischem oder generell ovalem Querschnitt, und wird daher im Weiteren "Oval-Zylinder" genannt. Dieser individuelle Abschnitt 11 dient dazu, den PZ 1 unverwechselbar in einer bestimmten Position und Orientierung im Blank 7 einsetzen zu können. Durch Vorsehen von exakt zum jeweiligen Zapfen 3 passender Aufnahme15 in einem Blank 7 können die Prothesenzähne 1 relativ zueinander genau in der Position angeordnet werden, die sie auch in der fertigen Prothese einnehmen müssen. Der individuelle Abschnitt des Zapfens 3 weist dazu innerhalb eines Zahnbogens, bevorzugt eines Gebisses, eine einzigartige Ausrichtung oder Fläche des Querschnitts oder beides auf. Beispielhaft wird ein elliptischer oder ovaler Querschnitt vorgeschlagen, u.a. da sich solche gerundeten Formen, z.B. durch Fräsen, gut herstellen lassen. Durch verschiedene Ausrichtung der Querschnittform und verschiedene Grösse des Querschnitts sind die PZ 1 individualisiert.

Der Zapfen 3 besteht aus demselben Material wie die äusserste Schicht des PZ 1, insbesondere dem Material an der Stelle, wo sich der Zapfen 3 am PZ 1 befindet, insbesondere Material der Kaufläche 5, also aus Material für die Nachbildung von Zahnschmelz. Der Zapfen 3 kann daher zu einem späteren Zeitpunkt durch Fräsen (oder auf andere Art) entfernt werden, ohne dass dabei PZ-fremdes Material (wie z.B. ein Klebstoff) auftritt. Der Querschnitt des individuellen Abschnitts 11 weicht auch derart stark von kreisförmig ab, dass ein Verdrehen nicht möglich ist, wenn der PZ 1 mithilfe des Zapfens 3 an einem Blank 7 angebracht ist.

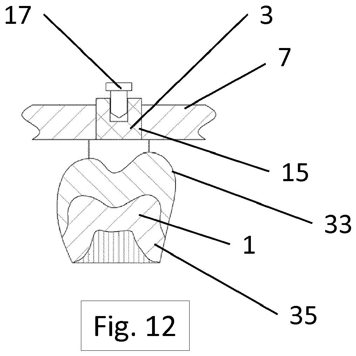

Die Zapfen 3 werden im Blank 7 fixiert, z.B. durch einen Klebstoff. Denkbar ist alternativ ein Verschweissen. Eine weitere Möglichkeit ist ein Eindrehen einer Schraube 17 in den Zapfen 3, wodurch der Zapfen geringfügig gespreizt wird ähnlich dem Spreizen eines Dübels (s. Fig. 12).

Ein Loch im Zapfen, z. B. das zum Eindrehen einer Schraube wie oben beschriebene, hat aber auch die Wirkung, dass die Befestigungswirkung bei einem Verkleben vergrössert wird.

Der kreiszylindrische Abschnitt 9 dient dazu, die genaue Grösse des PZ 1 zu bestimmen. Die kreiszylindrische Form gestattet ein Abnehmen des Durchmessers aus beliebiger Richtung. Während der Fertigstellung unterliegen PZ 1 einer generellen Grössenänderung, z.B. durch Schrumpfen, so dass die Masse im Einzelfall nicht exakt genug mit den Massen übereinstimmen, die der Produktion zugrunde liegen. Insbesondere könnte die Aufnahme im Blank 7 für den Zapfen 3, der ebenfalls der Grössenänderung unterliegt, nicht so genau gefertigt werden, dass der PZ 1 exakt und quasi spielfrei am Blank 7 anbringbar ist. Durch Bestimmen des Durchmessers des kreiszylindrischen Abschnitts kann die Grösse dieser Grössenänderung bestimmt und bei der Herstellung der Aufnahmen 15 im Blank 7 berücksichtigt werden.

Anhand des Durchmessers des kreiszylindrischen Abschnitts 9 wird ein Offset für die Fassungen relativ zur Dimensionierung bestimmt, die aus den Produktionsunterlagen der PZ-Rohlinge berechnet worden ist. Sofern die PZ-Rohling aus derselben Herstellungscharge stammen, ist es vorstellbar, dass ein gemeinsamer Offset verwendet werden kann, also ein Messverfahren mit höherem Auswand anwendbar ist. In der Regel stammen die Prothesenzähne jedoch aus verschiedenen Chargen.

Die Vermessung des kreiszylindrischen Abschnitts 9 ist automatisiert oder manuell, z.B. mit einer Messlehre, mit geringem Aufwand und daher schnell möglich. Aus der Differenz zwischen Messwert und Wert aus den Herstellungsunterlagen des PZ kann der Offset bestimmt werden. Bevorzugt wird durch diese Vermessung des kreiszylindrischen Abschnitts 9 auch das manuelle Abtasten der Kaufläche überflüssig.

Die Fixierungs-Ovale 11 bestehen bei den Prothesenzähnen 1 aus demselben Schmelz- oder Schneidematerial wie bei den konventionellen Prothesenzähnen. Sie werden zusammen mit dem Material des (Halte-) Blanks 7 (bevorzugt POM) beim finalen Bearbeiten einfach weggefräst, hinterlassen also keinerlei Rückstände. Die PZ 1 sind daher gegenüber den vorbekannten Prothesenzähnen weder chemisch noch mechanisch verändert. Die Zertifizierung wird dadurch wesentlich vereinfacht. Die Kaufläche 5 hat danach zumindest bei Totalprothesen wieder die Originalform. Bei natürlichen Restzähnen im Gegenkiefer werden auch die Kauflächen der Prothesenzähne bearbeitet, um sie an die Kauflächen der gegenüberliegenden Restzähne anzupassen. Eine derartige Nachbearbeitung ist bei den meisten vorbekannten Systemen von Prothesenzähnen nicht möglich, u.a. wegen der fehlenden Referenzierungsmöglichkeiten in der Fräsmaschine. Die Zapfen 3 gestatten jedoch eine exakte Positionierung in einem Blank 7, so dass die Position der einzelnen Prothesenzähne in der Bearbeitungsmaschine bekannt ist, wenn der Blank 7 in der Bearbeitungsmaschine präzis angeordnet wird. Die PZ 1 sind damit genau referenzierbar und können nachbearbeitet werden.

In dieser Variante kann jedenfalls die basale Bearbeitung der PZ 1 in der endgültigen Anordnung vorgenommen werden. Insbesondere kann die Unterseite 19 der Prothesenzähne durchgehend so gestaltet werden, dass sie nicht mehr in das Zahnfleisch hineinschneiden oder aus der rosafarbenen Prothesenbasis unten herausschauen und damit direkten Kontakt zur Mundschleimhaut haben.

Eine bevorzugte Variante der basalen Bearbeitung besteht darin, Löcher von unten in die PZ zu bohren. Dadurch wird die Verbindung des PZ zur Basis verbessert. Diese Massnahme ist an sich bekannt.

Auch das Material für die Nachbildung des Zahnfleischs, ggf. zusätzlich andere Vorkehrungen, können angebracht werden und nachbearbeitet werden. Danach wird der Blank 7 gelöst und die Zapfen 3 von den Kauflächen 5 entfernt, z. B. durch Fräsen, wobei auch die Kaufläche 5 in diesem Bereich herausgearbeitet wird.

Für die Referenzierung in dieser Phase nach Entfernen des Blanks 7 können charakteristische Merkmale der Prothese in fertiggestellten Bereichen festgehalten werden, oder es können Referenziermittel wie Referenzierkügelchen vorübergehend angebracht werden, solange die Referenzierungsmöglichkeit durch den Blank 7 noch gegeben ist.

Gemäss einer zweiten bevorzugten Ausführung werden Prothesenzähne 1 verwendet gemäss der ersten Ausführungsform mit der zusätzlichen Massnahme, dass die äusserste Schicht, die den Zahnschmelz nachbildet, mit einem erheblichen Übermass vorhanden ist.

In dieser einfacheren Variante sind die Bereiche, die Kontaktflächen zu benachbarten PZ 1 im Gebiss bilden (mesiale und distale Kontaktflächen), fertig ausgebildet und benötigen keine Nachbearbeitung mehr. Insbesondere entfällt ein Nachfräsen dieser Bereiche. Da die Zähne damit in der Breite bereits die endgültigen Masse aufweisen, können sie wie die PZ 1 der ersten Ausführungsform nebeneinander in der Anordnung am Blank 7 angebracht werden, die der Anordnung in der fertigen Prothese entspricht.

Zusätzlich zur basalen Bearbeitung können hier die Innenflächen 21 (linguale, labiale und palatinale Flanken) und insbesondere die Aussenflanken 23 (buccale Flanken) der PZ 1 nachbearbeitet werden. Damit können die bei offenem Mund deutlich sichtbaren äusseren Flächen (Aussenflanken) 23 der PZ 1 wie auch die Kauflächen 5 einem Finish unterzogen werden und insbesondere individuell durch Abtragen, z.B. Fräsen, des überschüssigen Zahnschmelzmaterials gestaltet werden.

Eine dritte, weiter bevorzugte Ausführung zeichnet sich dadurch aus, dass die PZ 1 gegenüber der zweiten Ausführung zwar mit Zahnschmelzmaterial überzogen sind, jedenfalls im Bereich, der im späteren PZ 1 Zahnschmelz nachbildet, also sich im Wesentlichen in der fertigen Prothese oberhalb des Zahnfleischsaum befindet. Im Übrigen entsprechen die Prothesenzähne 1 von der Schichtung und dem Material her den vorbekannten Prothesenzähnen. Der Zahnschmelzimitatüberzug ist jedoch nicht oder nur grob an die spätere Oberfläche angepasst und muss noch weiter bearbeitet werden. Da diese PZ-Rohlinge 27 also in jeder Richtung ein Übermass aufweisen, können sie nicht in einem Blank 7 in der Position wie in der Prothese angeordnet werden.

Auf dem Zentrum der Kaufläche wird auf jedem Zahn 1 ein Zapfen 3 (Oval-Zylinder) in Original-Schmelzmaterial aufgetragen. Dabei unterscheiden sich die Durchmesser der Oval-Strukturen ebenfalls so weit voneinander, dass ein Verdrehen sowie eine Verwechslung nicht möglich ist. In Verbindung mit der um den Oval-Zylinder 3 herum freiliegenden Zahnfläche passt immer nur 1 Zahn je Bohrung/Negativstruktur, eine Verwechslung ist damit nicht möglich. Die mesialen und distalen Zahnflächen haben hier jedoch nicht die gleiche Form wie die vorbekannten Prothesenzähne. Die PZ-Rohlinge, 27 sind an allen Flächen 2 mm dicker (Offset 2 mm). An einem PZ-Rohling 27 können alle Oberflächenbereiche (buccale, linguale, labiale und palatinale Flanken, mesiale und distale Kontaktflächen zu Nachbarzähnen) nachgefräst werden. Das Minimum der Dicke der Zahnschmelzimitatschicht, bzw. allgemein der Dicke der Schicht über dem Imitat des Dentinkerns, ist 0,3 mm. Davon ausgehend sind weitere denkbare minimale Dicken von 0,5 mm, 1 mm, und die oben erwähnten 2 mm. Zunehmende Dicken bieten grösseren Spielraum bei der Gestaltung der Oberfläche und der Verschiebung und Ausrichtung des Dentinkerns relativ zur Oberfläche.

Die Zapfen oder Fixierungs-Ovale 3 sind bei den modifizierten Prothesenzähnen 1 aus demselben Schmelz-/Schneidematerial hergestellt wie bei den vorbekannten Prothesenzähnen. Sie werden auch hier zusammen mit dem Material des Halteblanks 7 beim finalen Bearbeiten weggefräst. Damit können diese Zähne auch Lücken füllen, für die die vorgefertigten Prothesen-Zähne zu schmal sind. Das ist bei Teilprothesen häufig sinnvoll.

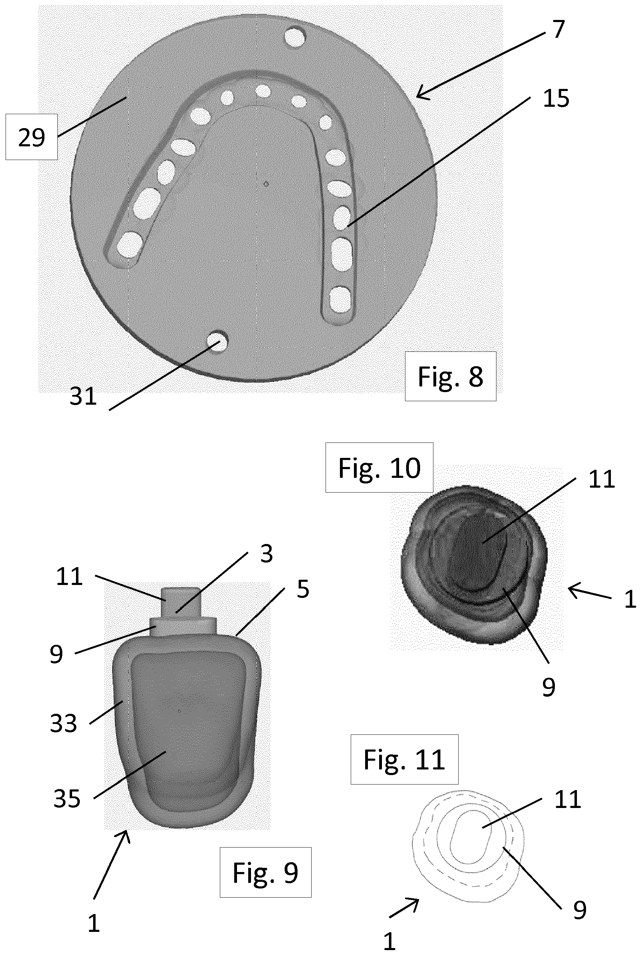

Der Hilfsblank, der zum Bearbeiten der Oberfläche der PZ-Rohlinge eingesetzt wird, kann eine beliebige Form haben, z.B. im Wesentlichen eine Platte 29 sein, wie beispielsweise in Fig. 8 gezeigt. Er weist zum einen Referenzierungsmerkmale 31 auf, um ihn in genau bekannter Position in einer Bearbeitungsmaschine anordnen zu können. Zum anderen ist er mit Aufnahmen 15 für die Zapfen der PZ-Rohlinge 27 vorgesehen, bevorzugt von einer oder einer Anzahl Prothesen, da die Bearbeitung der Sätze von PZ für mehr als eine Prothese durch Anordnung der benötigten PZ-Rohlinge ein einem Hilfsblank denkbar ist.

Die Aufnahmen (Fassungen) 15 werden bevorzugt in einer Bearbeitungsmaschine im Hilfsblank 29 spezifisch hergestellt. Da der Hilfsblank in der Bearbeitungsmaschine referenziert ist und die Fassungen 15 an bekannten Positionen herausgearbeitet werden, sind damit auch die PZ-Rohlinge 27, die in die Fassungen 15 mittels ihrer Zapfen 3 eingesteckt sind, für eine Bearbeitung genau referenzierbar.

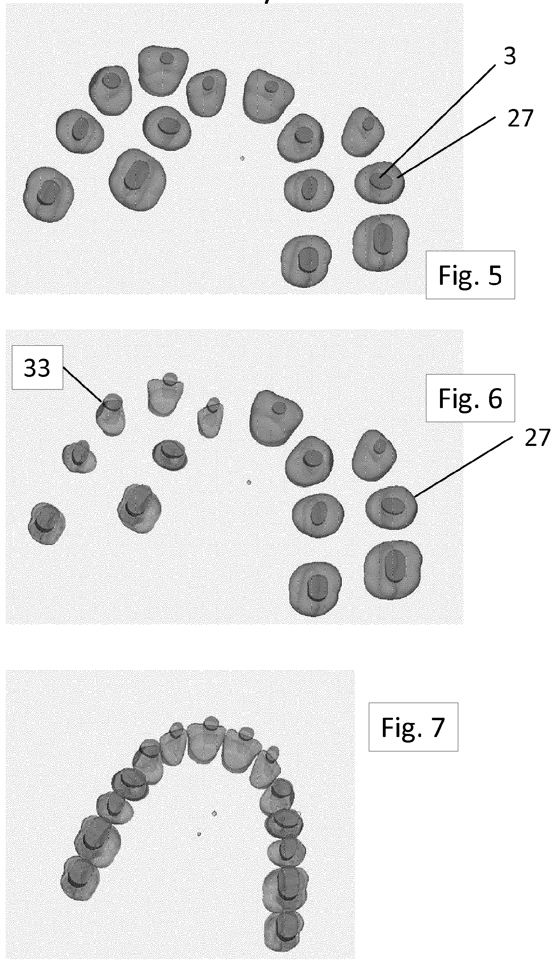

Die Fig. 5 bis 6 zeigen PZ-Rohlinge 27 in einem solchen Hilfsblank, wobei jedoch der Hilfsblank selber nicht dargestellt ist, da seine Formgebung je nach gewählter Bearbeitungsumgebung angepasst ist und für die Erfindung unwesentlich ist.

Fig. 5 zeigt die PZ-Rohlinge 27 (Sicht auf Zapfen 3) eingesetzt in einen Hilfsblank (nicht dargestellt) in einer Anordnung, die beliebig ist, aber so gewählt ist, dass die PZ-Rohlinge 27 für die Bearbeitung gut zugänglich sind, damit die Oberfläche, insbesondere die aus Zahnschmelzimitat bestehende Oberfläche, zugänglich ist. Fig. 6 zeigt die PZ-Rohlinge in einem Zustand, in dem etwa die Hälfte der PZ-Rohlinge (bearbeitete PZ-Rohlinge 33 links in Fig. 6) bearbeitet ist

Sind alle PZ-Rohlinge 27 bearbeitet, entsprechen sie im Wesentlichen konventionellen PZ bis auf die Anwesenheit des Positionierungszapfens 3. Sie werden aus dem Hilfsblank entfernt und in einen Blank 7 wie im ersten Ausführungsbeispiel eingesetzt. Die weitere Bearbeitung geschieht wie im ersten Ausführungsbeispiel.

Anzumerken ist der besondere Vorteil dieser Ausführungsform, dass es durch das Bearbeiten der gesamten Zahnschmelzoberfläche 33 möglich ist, die Position und Ausrichtung des Dentinkerns 35 relativ zur Oberfläche zu verändern, um eine bessere Anpassung an ein natürliches Aussehen bzw. ein gewünschtes Aussehen zu erreichen.

Wegen der Möglichkeit, die PZ 1 an individuelle Gegebenheiten anzupassen, ist die dritte Ausführungsform auch vorteilhaft für Teilprothesen mit Metallgerüst.

Bei Teilprothesen mit Metallgerüst müssen die Zähne basal noch weiter gekürzt werden, um zusätzlichen Platz für das Metallgerüst und die Klammern zu schaffen. Oft ist auch noch eine seitliche Anpassung der Zahnbreite notwendig, da die verschiedenen Lücken (z.B. rechts und links) sich mit der Zeit unterschiedlich durch Verschieben oder Kippen der Restzähne in die Lücken hinein verändern. Damit die Zähne mit der Fräsmaschine sowohl bezüglich der "Bauhöhe" als auch der Breite mesial-distal, aber evt. auch transversal bearbeitet werden können, müssen sie in der Maschine in definierten Positionen befestigt werden. Die Haltekavitäten (Fassungen) für die Zapfen 3 in den Hilfsblanks werden von der Fräsmaschine selbst gefräst. Somit ist gewährleistet, dass die Zähne die exakt richtige Position besitzen. Die Haltestrukturen (Fassungen 3) werden in einen Halteblank oder Hilfsblank (i.d.R.:aus POM) gefräst. In diesen Haltestrukturen werden die Prothesenzähne einzeln und mit Abstand über den gesamten Halteblank verteilt befestigt. Approximalflächen zu den Nachbarzähnen werden auch gefräst, im Gegensatz zu auf Übermass gefrästen kompletten Zahnkränzen, wo in einer bekannten Ausführung alle Zähne miteinander verbunden sind.

Denkbar ist auch, dass der Blank mit den Haltestrukturen gedruckt wird. Dabei sind bevorzugt auch Referenziermerkmale vorzusehen. Wenn eine Nachbearbeitung, z. B. durch Fräsen, anfällt, können dabei auch die Referenziermerkmale präzise bearbeitet werden.

Aus der Beschreibung der Ausführungsbeispiele sind dem Fachmann Abwandlungen und Ergänzungen zugänglich, ohne den Schutzbereich der Erfindung zu verlassen, der durch die Ansprüche definiert ist. Insbesondere denkbar sind:
- Neben parallelen Wandungen der Zapfen sind auch konusförmige möglich. Bei einem Konuswinkel von 6° besteht eine optimale Retention. Der Konuswinkel kann maximal 10°, bevorzugt maximal 8° betragen. Wenn die Achsen der Koni oder Zylinder stark divergieren, können die Rohlinge mit Koni besser befestigt werden, da sie sich gegenseitig "nicht im Wege stehen". Der Konus hat auch eine selbstzentrierende Wirkung. Der Konus kann vorteilhaft mit dem in den Zapfen eingesetzten Spreizelement, z. B. eine Schraube, kombiniert werden.
- Der Zapfen besteht aus wenigsten zwei Materialien. Ein Material ist dasjenige der Kaufläche, bzw. der Fläche, die zur Ausbildung der Kaufläche ausgebildet ist, und der Zapfen besteht wenigstens an dem Ende, das am Prothesenzahnkörper anschliesst, aus diesem Material. Damit wird vermieden, dass Fremdmaterial beim Entfernen des Zapfens am Prothesenzahn verbleiben. Die übrigen Teile des Zapfens bestehen aus anderem Material, das insbesondere für den Zweck (Fixierung im Blank 7, 29) besser geeignet ist. Diese prothesenseitige Ende des Zapfens kann z.B. der kreiszylindrische Abschnitt sein. Denkbar ist ein Abschnitt von mindestens 10 % der Gesamtlänge des Zapfens. Wenn die Kaufläche durch Abtragen von Zahnschmelzmaterial noch ausgebildet wird, kann das Ende nur aus der Grenzoberfläche bestehen, da auf jeden Fall Kauflächenmaterial unterhalb des Zapfens abgetragen wird. Andererseits ist es nicht nur einfacher, sondern wegen des Bestimmens des Offsets der Masse des Prothesenzahns regelmässig vorteilhaft, wenn der Zapfen einheitlich aus dem gleichen Material wie der Prothesenzahn besteht.
- Die Form der Zapfen entspricht den Zähnen. Beispielsweise kann ein kleiner Zapfen auf einem Schneidezahn angeordnet sein, ein abgerundet dreieckiger Zapfen auf einem Eckzahn und auf Backenzähnen ein ovaler Zapfen. Weiter bevorzugt können die Zapfen zum distalen Ende des Zahnbogens grösser werden, um damit die Stellung des Zahns genauer zu codieren. Entsprechend kann der zweite Schneidezahn einen Zapfen mit anderer Querschnittfläche als ein Prothesenzahn für den ersten Schneidezahn. Auf der basalen Fläche kann zusätzlich eine lesbare Kennzeichnung des Zahns vorhanden sein.

Damit können auch Personen ohne entsprechende Ausbildung die Zähne erkennen und richtig zuordnen. In Europa ist eine Kombination aus Quadrant (eine Ziffer von 1 bis 4) und Nummer des Zahns (eine Ziffer von 1 bis 7) üblich.

### Glossar

| | |
|---|---|
| Ovalzylinder | Identifizierender Teil des Zapfens auf der Kaufläche eines PZ, bevorzugt von ovalem Querschnitt. |
| PZ | Prothesenzahn / Prothesenzähne |
| Referenzieren | Feststellung von Ort, ggf. auch Orientierung, in einer Dimension, einer Fläche oder im Raum, insbesondere zum zweck einer weiteren Bearbeitung eines referenzierten Objekts. |

## Patentansprüche

1. Prothesenzahn-Rohling (1, 27), **dadurch gekennzeichnet, dass** der Rohling einen Prothesenzahnkörper mit einer Kauflächenoberfläche (5) umfasst, die Kauflächenoberfläche die Kaufläche eines aus den Prothesenzahnrohling herstellbaren Prothesenzahns oder ein Abschnitts des Prothesenzahnrohlings ist, aus dem die Kaufläche herausarbeitbar ist, und auf der ein Zapfen (3) angeordnet ist, so dass der Prothesenzahn-Rohling mittels des Zapfens in einer Haltestruktur (7, 29) referenziert positionierbar ist.

2. Prothesenzahn-Rohling (1, 27) gemäss Anspruch 1, **dadurch gekennzeichnet, dass** der Zapfen (3, 27) sich im Wesentlichen in Richtung einer Längsachse erstreckt, die von einem Fuss des Prothesenzahnrohlings zur Kauflächenoberfläche verläuft.

3. Prothesenzahn-Rohling (1, 27) gemäss einem der Ansprüche 1 bis 2, **dadurch gekennzeichnet, dass** der Zapfen einen Querschnitt aufweist, der von kreiszylindrisch abweicht, so dass der Zapfen in einer eng an den Zapfen angepassten Fassung nicht drehbar ist, bevorzugt einen Querschnitt von einer der Formen elliptisch, oval, regelmässig polygonal mit mindestens drei Ecken, regelmässig polygonal mit drei bis neun Ecken, unregelmässig polygonal mit mindestens drei Ecken, unregelmässig polygonal mit drei bis neun Ecken, regelmässig polygonal mit mindestens drei abgerundeten Ecken, regelmässig polygonal mit drei bis neun abgerundeten Ecken, unregelmässig polygonal mit mindestens drei abgerundeten Ecken, unregelmässig polygonal mit drei bis neun abgerundeten Ecken.

4. Prothesenzahn-Rohling (1, 27) gemäss einem der Ansprüche 1 bis 3, **dadurch gekennzeichnet, dass** der Zapfen (3) einen Messabschnitt (9), der sich am Ende des Zapfens an der Kauflächenoberfläche (5) befindet, mit kreiszylindrischem Querschnitt aufweist, sodass der Durchmesser des Messabschnitts aus beliebiger Richtung messbar ist.

5. Prothesenzahn-Rohling (1, 27) gemäss Anspruch 4, **dadurch gekennzeichnet, dass** die Höhe des Messabschnitts (9) höchstens 1/3 der Länge des Zapfens (3), bevorzugt höchstens1/4, weiter bevorzugt höchstens 1/5 und noch weiter bevorzugt höchstens 1/10 beträgt.

6. Prothesenzahn-Rohling (1, 27) gemäss einem der Ansprüche 1 bis 5, **dadurch gekennzeichnet, dass** wenigstens das Ende des Zapfens (3), das an der Kauflächenoberfläche (5) anschliesst, bevorzugt der ganze Zapfen (3), aus demselben Material besteht wie ein Abschnitt des Prothesenzahn-Rohling, der Zahnschmelz nachbildet, insbesondere dem Material des Abschnitts des Prothesenzahn-Rohlings, der zur Ausbildung der Kaufläche (5) ausgebildet ist.

7. Prothesenzahn-Rohling (1, 27) gemäss einem der Ansprüche 1 bis 6, **dadurch gekennzeichnet, dass** der Teil des Prothesenzahn-Rohling, der wenigstens die Kaufläche (5) abgesehen von der vom Zapfen (3) bedeckten Fläche und die Seitenwände (21, 23) unterhalb der Kaufläche umfasst, über mindestens die Hälfte, bevorzugt mindesten 90 %, der Höhe des Abschnitts des Prothesenzahn-Rohlings, der zur Anordnung oberhalb eines Zahnfleischsaums einer Zahnprothese ausgebildet ist, als eine einsatzfähige Zahnoberfläche ausgebildet ist.

8. Prothesenzahn-Rohling (1, 27) gemäss einem der Ansprüche 1 bis 7, **dadurch gekennzeichnet, dass** der Prothesenzahn-Rohling eine von Zahnschmelzmaterial gebildete Oberfläche aufweist, aus der von Zahnschmelz gebildete Seitenwände (21, 23) und die Kaufläche (5) eines Prothesenzahns durch eine subtraktive Bearbeitung herausbildbar ist.

9. Prothesenzahn-Rohling (1, 27) gemäss Anspruch 8, **dadurch gekennzeichnet, dass** die Schichtdicke der aus Zahnschmelz gebildeten Oberfläche wenigstens in den Abschnitten, die für die Ausbildung der Seitenwände (21, 23) des Prothesenzahns ausgebildet sind, mindestens 0, 3 mm, bevorzugt mindestens 0,5 mm, weiter bevorzugt mindestens 1 mm, und noch bevorzugt mindestens 2 mm beträgt.

10. Satz von Prothesenzahn-Rohlingen umfassend mindestens zwei Prothesenzahn-Rohlinge (1, 27) gemäss einem der Ansprüche 1 bis 9, **dadurch gekennzeichnet, dass** die einzelnen Zapfen jeweils eine individuelle Zapfenform aufweisen, die im Wesentlichen eine Kombination von Ausrichtung des Zapfenquerschnitts und Grösse des Zapfenquerschnitts ist, so dass Prothesenzahn-Rohling des Satzes unverwechselbar in Fassungen (15) eines Blank einsetzbar sind, wobei die Fassungen jeweils eng an die Form des Zapfens des für die Fassung vorgesehen Prothesenzahn-Rohling angepasst sind.

11. Verfahren zum Herstellen einer Zahnprothese, **dadurch gekennzeichnet, dass** Prothesenzahnrohlinge (1, 27) gemäss einem der Ansprüche 1 bis 10 durch Einstecken der Zapfen (3) in genau an den jeweiligen Zapfen der Prothesenzahnrohlinge angepasste Fassungen (15) in einem Halteblank (7, 29) in der Anordnung, die durch die herzustellende Zahnprothese vorgegeben ist, angebracht werden.

12. Verfahren zum Herstellen einer Zahnprothese, **dadurch gekennzeichnet, dass** Prothesenzahnrohlinge gemäss Anspruch 10 in einer Haltestruktur (7, 29) durch Einstecken der Zapfen in eng an den jeweiligen Zapfen angepasste Fassungen (15) an referenzierten Positionen angeordnet werden und danach mindestens die Seitenflächen der Prothesenzahnrohlinge subtraktiv bearbeitet werden.

13. Verfahren gemäss einem der Ansprüche 11 bis 12, **dadurch gekennzeichnet, dass** der Zahnprothesenrohling (1, 27) durch mindestens eine der folgenden Massnahmen in der Haltestruktur (7, 29) fixiert wird:
- Auftragen eines Klebstoffs;
- Auftragen und Aushärten einer Masse auf die Enden der Zapfen;
- Eindrehen eines Spreizkörpers (17), insbesondere einer Schraube, in die Zapfen (3), um deren Querschnitt zu vergrössern.
